# EUROPÄISCHE PATENTSCHRIFT

(11) **EP 3 797 597 B1**
(45) Veröffentlichungstag und Bekanntmachung des Hinweises auf die Patenterteilung: **24.12.2025**
(21) Anmeldenummer: 19200244.2
(22) Anmeldetag: 27.09.2019
(51) Int. Cl.: A23B 7/148

(54) **NACHREIFEKAMMER UND VERFAHREN ZUM NACHREIFEN VON ADSTRINGIERENDEN FRÜCHTEN**
MATURING CHAMBER AND METHOD FOR MATURING ASTRINGENT FRUITS
CHAMBRE DE POSTMATURATION ET PROCÉDÉ DE POSTMATURATION DE FRUITS ASTRINGENTS

(43) Veröffentlichungstag der Anmeldung: 31.03.2021
(73) Patentinhaber: Wirth, Roland, 04509 Schönwölkau (DE); Einenkel, Jörg, 06188 Landsberg (DE)
(72) Erfinder: de Bortoli, Valdir, 56332-578 Petrolina PE (BR)
(74) Vertreter: Gulde & Partner

(56) Entgegenhaltungen:
- CN-U- 204 393 263
- JP-A- S5 668 348
- JP-A- S5 966 836
- KR-A- 19990 040 367
- US-A- 5 063 753
- US-A1- 2012 097 050
- US-A1- 2015 257 401

## Beschreibung

Die Erfindung betrifft eine Nachreifekammer und ein Verfahren zum Nachreifen von adstringierenden Früchten. Die Erfindung betrifft insbesondere eine Nachreifekammer und ein Verfahren zur Verringerung einer Tanninkonzentration in Kakipflaumen.

### Technologischer Hintergrund

Die Kaki, auch Kakipflaume, ist die süße, orangefarbene, äußerlich einer großen Tomate ähnelnde Frucht des Kakibaums (Diospyros kaki). Die meisten Kaki Sorten haben einen hohen Tanningehalt. Das Tannin verursacht einen bitteren, adstringierenden Geschmack der Kakipflaume, welches ein "pelziges" Gefühl auf der Zunge hinterlässt. Beim Verzehr von größeren Mengen an Tanninen, können auch schädliche Phytobezoare (Magensteine) im Magen entstehen. Die Kakipflaumen müssen deshalb nachgereift (engl. bletting) werden um vor allem das geschmacksstörende Tannin abzubauen. Die Adstringenz der Tannine wird auf verschiedene Weise beseitigt. Beispiele sind die Reifung durch mehrtägige Lichteinwirkung und die Umhüllung der Kakipflaumen mit Papier (wahrscheinlich, weil dies die Ethylenkonzentration der Umgebungsluft erhöht). Die Ethylenreifung kann verwendet werden, um die Zuverlässigkeit und Gleichmäßigkeit der Reifung zu erhöhen, und der Prozess kann durch Zugabe von Ethylengas in die Atmosphäre, in der die Früchte gelagert werden, erheblich beschleunigt werden. Gebräuchlich ist es, die reifenden Kakipflaumen in einem sauberen, trockenen Behälter zusammen mit anderen Obstsorten, die während der Reifung besonders große Mengen an Ethylen abgeben, zu lagern; Äpfel und verwandte Früchte wie Birnen sind wirksam, ebenso wie Bananen und mehrere andere. Andere Chemikalien werden kommerziell verwendet, um Kakipflaumen künstlich zu reifen oder ihre Reifung zu verzögern. Beispiele sind Alkohol und Kohlendioxid, die das Tannin in die unlösliche Form umwandeln. Solche Entlüftungsprozesse werden manchmal durch Kälte- oder Frostbelastung der Frucht in Gang gesetzt. Die daraus resultierende Zellschädigung stimuliert die Freisetzung von Ethylen, was den Abbau der Zellwand fördert. Bei Begasung der Kakipflaume mit Kohlenstoffdioxid wird das Tannin schnell abgebaut. Zur CO2-Konzentration und zur Dauer der Begasung gibt es verschiedene Untersuchungen, z.B. Salvador et al., 2008. So wird in der Praxis eine feste Temperatur von ca. 20°C und eine CO2-Konzentration zwischen 50% und 100% über 24 Stunden verwendet. Die Begasung der Früchte mit einer unveränderten und starren CO2-Konzentration über 24 Stunden kann, je nach Reifezustand und Tanningehalt der Früchte, zu einer übermäßigen oder zu geringen Nachreifung führen. Dies verschlechtert den Geschmack und beschädigt die Kakipflaumen. Deshalb werden derzeit oft die Früchte mit einer geringeren CO2-Konzentration oder über kürzere Zeiträume begast und dann das restliche Tannin über eine konventionelle Lagerung der Früchte abgebaut. Dies verringert jedoch die Haltbarkeit der resultierenden verzehrfertigen Kakipflaumen deutlich.

Die meisten Detannisierungsmethoden zielen darauf ab, eine Anreicherung von Acetaldehyd im Fruchtfleisch zu fördern, die die Polymerisation der adstringierenden löslichen Tanninmoleküle bewirkt und sie in eine gelartige Verbindung umwandelt, die unlöslich und somit nicht adstringierend ist. Zu den am häufigsten verwendeten Methoden gehören: Aufbringen von Ethylalkoholdampf, der das Enzym Alkoholdehydrogenase mit anschließender Akkumulation von Acetaldehyd aktiviert, und die Förderung der Anaerobiose, die die Umwandlung von Pyruvat in Acetaldehyd in einer durch das Enzym Pyruvatdecarboxylase katalysierten Reaktion induziert.

Das Hauptmerkmal adstringierender Kaki-Sorten ist der hohe Gehalt an löslichem Tannin, der für die Adstringenz der Frucht verantwortlich ist. Im Mund fällen Tannine die im Speichel vorhandenen Proteine, insbesondere Amylase, aus, die, sobald sie an Geschmacksrezeptoren gebunden sind, ein Gefühl der Gaumentrockenheit hervorrufen, das für adstringierende Nahrungsmittel charakteristisch ist.

Acetaldehyd ist die Verbindung, die für die Polymerisation von Tanninmolekülen verantwortlich ist. Die Ansammlung von Acetaldehyd im Fruchtfleisch von Kaki-Früchten wird Tage bevor sie nicht adstringierend sind, beobachtet. Acetaldehyd wird unter normalen Bedingungen während der Fruchtreife gebildet und ist eine der Verbindungen, die für die Aromabildung verantwortlich sind.

Eine andere Möglichkeit zur Steigerung der Acetaldehydproduktion besteht darin, die Früchte einem anaeroben Zustand auszusetzen.

Sowohl die Dosierung als auch die Expositionsdauer von Früchten gegenüber Detannisierungsbehandlungen sind hinsichtlich der Wirksamkeit einer Sorte gegenüber einer anderen variabel. Die Detannisierung hängt von mehreren Faktoren ab. Sie variieren von Sorte zu Sorte, Klimafaktoren, Erntepunkten, Kaliber und Bodentyp. Wenn während des Prozesses Fehler gemacht werden, kann dies zu Erweichen und / oder Schwärzung des Fruchtfleisches, zu einem Verlust der Haltbarkeit, zu einer Änderung des Geschmacks und sogar zu einem Verlust der Frucht selbst führen.

Konventionelle Verrichtungen zum Abbau von Tannin sind aus CN 204393263 U, KR 10 - 241152 B1 und KR 10-1865658 B1 bekannt.

Konventionelle Lagersysteme sind aus US 2015/257401 A1, US 2012/097050 A1, US 5 063 753 A, CN 204 393 263 U, JP S56 68348 A, KR 1999 0040367 A und JP S59 66836 A bekannt. Angesichts dieser Faktoren wurde der Prozess der Nachreifung, Konservierung und Erhöhung der Lagerfähigkeit entwickelt, ohne die Fruchteigenschaften durch das erfindungsgemäße Verfahren und die zugehörige Nachreifekammer zu verändern.

### Zusammenfassung der Erfindung

Es ist somit Aufgabe der vorliegenden Erfindung, ein verbessertes Nachreifungsverfahren für adstringierende Früchte und eine entsprechende Nachreifekammer anzugeben. Insbesondere soll ein schonenderer Nachreifungsvorgang von Kakipflaumen durch eine kontrollierte Begasung mit CO2 erreicht werden.

Das erfindungsgemäße Verfahren betrifft ein Verfahren zum Nachreifen von adstringierenden Früchten, wobei in einem gasdichten Nachreifungsraum die nachzureifenden Früchte angeordnet werden und während der Nachreifung der Früchte deren Respirationsaktivität gemessen wird dadurch gekennzeichnet, dassdas Verfahren eine kontrollierte Begasung der Früchte mit Kohlenstoffdioxid umfasst.

Die erfindungsgemäße Reifekammer betrifft eine Nachreifekammer zur Nachreifung von adstringierenden Früchten, wobei die Kammer umfasst:
a) einen gasdichten Nachreifungsraum zur Anordnung von nachzureifenden Früchten,
b) ein Mittel zur Überwachung einer Kohlendioxid- und einer Sauerstoffkonzentration,
c) eine Kohlendioxidgasquelle,
d) ein Temperatursteuerungssystem,
e) einen Kohlendioxidadsorber,
f) einen Stickstoffgenerator,
g) einen Wärmetauscher,
h) eine Lunge,
i) eine Druckklappe, und
j) eine Sauerstoffzufuhr;
wobei die Nachreifekammer ausgebildet ist, das Verfahren nach einem der vorherigen Ansprüche auszuführen.

Diese Aufgaben werden durch einen Nachreifeverfahren sowie eine Nachreifekammer mit den Merkmalen der unabhängigen Ansprüche gelöst.

Die vorliegende Erfindung bezieht sich auf einen Gegenstand, der in den beigefügten Ansprüchen definiert ist. Die nachfolgende Beschreibung unterliegt dieser Einschränkung. Jegliche Offenbarung, die außerhalb des Geltungsbereichs der Ansprüche liegt, dient lediglich der Veranschaulichung und zu Vergleichszwecken.

Somit betrifft ein erster Aspekt der Erfindung ein Verfahren zum Nachreifen von adstringierenden Früchten, bei welchem in einer gasdichten Kammer die nachzureifenden Früchte angeordnet werden und während der Nachreifung eine Respiration der Früchte gemessen wird, wobei das Verfahren eine kontrollierte Begasung der Früchte mit Kohlenstoffdioxid umfasst.

Das erfindungsgemäße Verfahren und die zugehörige Nachreifekammer analysiert die Atmung der Früchte innerhalb einer bestimmten Zeit und ermittelt die wichtigsten Merkmale, d.h. den richtigen Zeitpunkt, um die Früchte zu entgiften, ohne sie zu beschädigen. Durch die Messung des Atems überträgt die Frucht Informationen an die erfindungsgemäße Nachreifekammer, die sie zur Detannisierung benötigt. Diese Informationen sind Temperatur-, O2- und CO2- und Ethylen (C2H4)-Werte. Mit diesen Werten passt das erfindungsgemäße Verfahren die Nachreifekammer an die Bedürfnisse der Früchte an. Für unterschiedliche Mengen an Kakipflaumen gibt es unterschiedliche Variablen.

Im Unterschied zur Standard-Nachreifung in konventionelle Nachreifekammern, wobei während des Nachreifeprozesses eine Temperatur sowie eine starre Kohlenstoffdioxidkonzentration über einen festen Zeitraum einmalig eingestellt wird, wird bei dem erfindungsgemäßen Nachreifeverfahren, insbesondere zur Anwendung in einer erfindungsgemäßen Nachreifekammer, neben einer kontrollierten Temperaturführung auch die Respiration (Atmung) der Ware gemessen und insbesondere in Abhängigkeit dieser Respiration eine Regelung einer Gaskonzentration (CO2 / O2 / Ethylen) in einem Nachreifungsraum der Kammer dynamisch gesteuert.

Nachreifen (engl. bletting) bedeutet hier, dass die adstringierenden Früchte nach der Ernte so verarbeitet werden, dass die störenden Adstringenzien in ihnen abgebaut werden, vorzugsweise wird das für die adstringierende Wirkung der Früchte verantwortliche Tannin in eine unschädliche Form umgewandelt, vorzugsweise wird wasserlösliches Tannin in eine wasserunlösliche Form umgewandelt.

Die erfindungsgemäße Nachreifekammer und das erfindungsgemäße Verfahren sind nicht auf die Anwendung auf Kakipflaumen beschränkt. Es lassen sich damit alle Früchte, bei denen eine hohe Tanninkonzentration durch Begasung mit Kohlenstoffdioxid verringert wird, nachreifen. Beispiele sind Mispeln, Quitten, Mehlbeeren und andere durch Tannine adstringierende Früchte.

Der wesentliche Vorteil der vorliegenden Erfindung ist, dass das die Tanninkonzentration in den adstringierenden Früchten innerhalb weniger Tage kontrolliert herabgesenkt werden kann. Beispielsweise kann innerhalb von 42 bis 96 Std die Tanninkonzentration auf 1 bis 1,8 % reduziert werden. Dabei kann insbesondere auf eine nachträgliche konventionelle Lagerung der Früchte um restliches Tannin abzubauen verzichtet werden, welche die Lebensdauer der Früchte negativ beeinflussen würde. Die Früchte sind nach dem erfinderischen Nachreifeprozess sofort verzehrfertig und die Lebensdauer (engl. shelf life) ist maximal lang. Weiterhin wird eine bessere und gleichmäßigere Nachreifung aller Früchte über die gesamte Nachreifekammer erreicht. Die Qualität der erfindungsgemäß nachgereiften Früchte ist reproduzierbar und damit konstant gut. Ferner kann die dafür notwendige Nachreifungszeit (Abhängig von der Waren-Ausgangs-Qualität und -situation) automatisch vom Nachreifeprogramm ermittelt und berechnet (kann somit entsprechend variieren) werden. Durch die Berücksichtigung der Fruchtrespiration beim Nachreifungsprozess kann der Verbrauch von Kohlenstoffdioxid gezielt auf den Bedarf der Früchte gesteuert und damit gegenüber dem Stand der Technik auf ein Minimum reduziert werden. Durch die verkürzte Nachreifungsdauer kann zudem der Nachreifekammerdurchsatz erhöht und Energie für die Prozessführung eingespart werden. Insbesondere kann die Ware auch einfacher im jeweils aktuellen Nachreife-Stadium gestoppt bzw. dort gehalten werden. Dies ist besonders bei langen Lieferwegen bis zum Endkunden von Vorteil, da hierbei ein vorbestimmter Nachreifezustand (lösliche Tanninkonzentration in der Frucht) variiert und durch das erfindungsgemäße Verfahren gesteuert werden kann. Weiterhin kann flexibel auf veränderte Verkaufs-/ Absatz-Mengen für den Einzelhandel reagiert werden, was zu einer deutlich reduzierten Gefahr von Reklamation und Waren-Ausfall (Verderb) führt. Die von dem erfinderischen Nachreifeverfahren nachgereiften Früchte haben einen höheren Brix-Grad, d.h. sie enthalten mehr Zucker und das Fruchtfleisch ist fester als nach herkömmlichen Nachreifeverfahren.

In einer bevorzugten Ausgestaltung der Erfindung ist daher vorgesehen, dass die Nachreifung in Abhängigkeit einer Respiration der Früchte über eine CO₂-, eine O₂-Konzentration, eine Ethylenkonzentration und / oder eine Temperatur in der Kammer, insbesondere in einem Nachreifungsraum der Kammer, kontrolliert und/oder gesteuert wird. Während des Nachreifungsprozesses erfolgt ein Gasaustausch der Früchte mit der Umgebung, der als Respiration, also Atmung, bezeichnet wird.

Unter Aufnahme von Sauerstoff reifen die Früchte unter Bildung und Einlagerung von niedermolekularen Kohlehydraten, insbesondere Zuckern. Dabei wird Kohlendioxid gebildet, welches als Respirationsgas entweicht. Dieser Prozess wird durch Anwesenheit von Ethylen, also C2H4, getriggert, wobei das Ethylen in Gegenwart von Sauerstoff zu den relevanten Kohlehydraten umgesetzt wird. Somit stellen die Respirationsparameter (CO₂ C₂H₄ und O₂) der Früchte ein Indiz für die Tanninkonzentration (Nachreifegrad) dar. Die Atmungsaktivität bestimmt die ideale CO2-Konzentration, d.h. die Messung der Sauerstoffaufnahme pro Zeiteinheit und/oder der CO2-Emission der Frucht pro Zeiteinheit. Basierend auf diesen Messungen und Werten wird die optimale CO2-Konzentration zwischen 10 und 90 Vol.% an der Frucht und in der Kammer eingestellt. Ist die optimale CO2-Konzentration in der Kammer erreicht, wird sie auf diesen Wert geregelt und die Atmungsaktivität der Frucht weiter gemessen und kontrolliert. Ändert sich die Atmungsaktivität nicht mehr messbar, z. B. durch die Sauerstoffaufnahme der Frucht oder die CO2-Freisetzung, wird der CO2-Gehalt deutlich reduziert. Gleichzeitig wird die Temperatur auf zwischen +18°C und +25°C gesenkt. In diesem Teil erfolgt die Homogenisierung der Fruchtatmung, d. h. die Kakifrucht soll wieder gleichmäßig atmen und damit stressfrei werden. Sobald dies geschieht, ist die Adstringenz beseitigt, der Nachreifeprozess beendet und die Frucht ist verzehrfertig.

Die Frucht kann dann in der Kammer bei einer Temperatur zwischen +0°C und +12°C weiter gelagert werden.

Vorzugsweise wird die Sauerstoffkonzentration in der Kammer während des gesamten Nachreifeprozesses in einem optimalen Bereich von 15,0 bis 20,9 Vol.% gehalten. Dies geschieht durch Zufuhr von Frischluft in die Kammer, wenn die O2-Konzentration den optimalen Bereich verlässt. Messungen der Gaskonzentrationen werden nur durchgeführt, wenn keine Frischluft oder Kohlenstoffdioxid aktiv zugeführt oder abgeführt wird, um nur den Einfluss der Früchte auf die Gas-Atmosphäre in der Kammer zu messen.

Die vorliegende Erfindung zeichnet sich gegenüber herkömmlichen Nachreifeverfahren daher insbesondere dadurch aus, dass die Fruchtatmung beim Nachreifungsprozess, insbesondere in einer erfindungsgemäßen Nachreifekammer, durch geeignete Mittel zur Messung der Respiration sowie eines Mittels zur Auswertung der erhaltenen Messwerte kontrolliert und überwacht wird.

Es hat sich gezeigt, dass eine übermäßige Kohlenstoffdioxid-Begasung von Früchten gewissermaßen zu einer Übersteuerung des Nachreifungsprozesses führen kann, welche nur schwerlich zu stoppen und zu kontrollieren ist. Dies hat zur Folge, dass die Früchte unkontrollierter nachreifen und die Früchte beschädigt werden und deren Geschmack verschlechtert werden. Die erfindungsgemäße Messung der Respiration ermöglicht nun eine gezielte Begasung der Früchte mit Kohlenstoffdioxid, welche ein nötiges Maß an Kohlenstoffdioxid nicht überschreitet, sodass eine besonders schonende Nachreifung der Früchte erzielt wird.

In bevorzugter Ausgestaltung der Erfindung ist daher vorgesehen, dass in einem Nachreifungsraum der Kammer eine vorbestimmte Kohlenstoffdioxidkonzentration eingestellt wird, die über die Dauer des Nachreifungsprozesses variiert wird. Dies hat den Vorteil, dass die Kohlenstoffdioxidkonzentration ein notwendiges Maß nicht überschreitet und insbesondere während des Prozesses an den Fortgang der Nachreifung angepasst werden kann, was wiederum zu schonend nachgereiften Früchten mit einer gleichmäßig geringen Tanninkonzentration führt.

In besonders bevorzugter Ausgestaltung der Erfindung ist zudem vorgesehen, dass bei einer Begasung mit Kohlenstoffdioxid die Kohlenstoffdioxidkonzentration in einem Bereich von 10 und 90 Vol.%, vorzugsweise in einem Bereich von 65 und 85 Vol.% liegt, noch bevorzugter in einem Bereich von 70 und 80 Vol.%, insbesondere zu keinem Zeitpunkt während des erfindungsgemäßen Verfahrens über 90 Vol.% liegt. Es zeigte sich, dass eine Begasung von mehr als 90 Vol.% in der Nachreifungskammer zu einer Übersteuerung des Nachreifungsprozesses führt, was durch die angegebenen bevorzugten Konzentrationen vermieden wird.

Die angegebenen Werte beziehen sich insbesondere auf zu mindestens 60 % gefüllte Nachreifungskammern und sind bei geringerer Auslastung der Nachreifungskammern entsprechend anzupassen. Dabei ist beispielsweise der Kohlenstoffdioxidwert als geregelter absoluter zugeführter Gaswert in Vol.% anzusehen.

Vorzugsweise wird die Kohlenstoffdioxidkonzentration innerhalb des Nachreifungsraums der Kammer nach einer vorbestimmten Zeitdauer reduziert und auf dem reduzierten Niveau, insbesondere von nicht mehr als 1 Vol.% vorzugsweise nicht mehr als 0,3 Vol.%, noch bevorzugter nicht mehr als 0,06 Vol.%, konstant gehalten. Diese Ausführungsform des erfindungsgemäßen Verfahrens optimiert die Gleichmäßigkeit der Nachreifung sowie die Haltbarkeit der nachgereiften Früchte weiter, da die Nachreifung noch schonender erfolgt. Eine zunächst höhere Konzentration ist notwendig, um die Nachreifung zunächst in Gang zu bringen, wird dann aber auf ein Mindestmaß an Kohlenstoffdioxid reduziert, um eine fortschreitende, sehr schonende Nachreifung bis zu einem vorbestimmten Sollwert zu realisieren. Darüber hinaus hat diese Ausgestaltung den Vorteil der Einsparung von Kohlenstoffdioxid, was ein Kostenersparnis mit sich bringt.

Mit besonderem Vorteil umfasst der Nachreifungsprozess des erfindungsgemäßen Verfahrens mehrere Phasen, die insbesondere durch die Gaskonzentrationen und/oder die Temperaturen im Nachreifungsraum gekennzeichnet sind.

Die erste Phase oder Startphase des erfindungsgemäßen Verfahrens ermöglicht es zunächst, alle im Nachreifungsraum der Kammer angeordneten nachreifenden Früchte in einen ähnlichen Nachreifezustand zu bringen, so dass alle Früchte im Wesentlichen die gleichen Ausgangsbedingungen für die Nachreifung aufweisen und somit unter den folgenden gleichen Nachreifebedingungen ein vergleichbares Nachreifeergebnis bilden. Ein Maß dafür ist die O2-Aufnahme und CO2-Freisetzung der Frucht vor der Nachreifung. Die Temperatur in der Kammer wird auf +15 bis +20 °C, vorzugsweise auf +16 bis +19 °C, eingestellt. In einer Zeitspanne von 2 bis 6 Stunden wird ihre Atmungsintensität gemessen. Die Phase ist beendet, wenn die Atmung gleichmäßig ist, d. h. die Änderung der CO2-Produktion pro Zeiteinheit (Erhöhung der CO2-Konzentration Δ[CO2]) und/oder die Änderung der O2-Konzentration Δ[O2] pro Zeiteinheit (Senkung der O2-Konzentration Δ[O2]) konstant bleibt.

Besonders vorteilhaft ist, dass in der zweiten Phase nur die O2-Konzentration als Funktion der Zeit gemessen wird und die Begasung mit CO2 innerhalb der Kammer beginnt. Die Temperatur wird auf +20 bis 30°C erhöht. Zu diesem Zeitpunkt tritt eine Zunahme des Metabolismus der Kaki-Frucht unstetig/ungleichmäßig auf, d. h. die Frucht soll bewusst stärker atmen. Somit sucht das System die ideale Temperatur für den Stoffwechsel der Frucht. Dieser Vorgang dauert 2 bis 6 Stunden. Wird die Atmung der Früchte wieder gleichmäßig, beginnt eine Begasung mit CO2. Zu diesem Zeitpunkt beginnt die Kakifrucht in Seneszenz zu gehen. Es kommt zu einer Unterscheidung zwischen Sauerstoff-Aufnahme und CO2-Abgabe, wodurch eine große Menge Acetaldehyd in der Pulpe gebildet wird. Acetaldehyd beginnt das Tannin zu verdünnen und verringert folglich die Adstringenz von Kaki-Früchten. Die richtige und optimale CO2-Konzentration ist gefunden, wenn der Sauerstoffverbrauch in der Höhe gleich bleibt und nicht schwankt. Die CO2-Konzentration in der Kammer nimmt mit der Zeit zu, da die CO2-Begasung stetig stattfindet. Ist der Sauerstoffverbrauch pro Zeiteinheit auf einen bestimmten Wert angestiegen und bleibt dieser Wert konstant, ist die optimale CO2-Konzentration für die Früchte gefunden.

In der dritten Phase wird die CO2-Konzentration innerhalb der Kammer durch dynamisches Ändern der CO2-Begasung konstant gehalten, vorzugsweise auf einen Wert von etwa 50 bis 90 Vol.%, bevorzugter 60 bis 85 Vol.%, noch bevorzugter 70 bis 80 Vol.%. Wird dann keine Änderung der O2-Konzentration gemessen und unterschreitet sie einen vorgegebenen Wert, wird die Endphase gestartet.

In der Endphase wird die Temperatur auf +10 bis +35°C, vorzugsweise +18 bis +25°C eingestellt. Die CO2-Begasung wird gestoppt, die Kammer mit Frischluft gespült und die Früchte 20 bis 52 Stunden ruhen gelassen. Vorzugsweise ist die Kohlenstoffdioxidkonzentration in dieser Phase bei maximal 1%. In dieser Phase des Zyklus erfolgt die Homogenisierung der Fruchtatmung, d. h. die Kakifrucht soll wieder gleichmäßig atmen und damit stressfrei werden. Sobald dies geschieht, ist die Adstringenz beseitigt und der Nachreifeprozess beendet. Vorzugsweise wird in dieser Phase zusätzlich die Ethylen-Konzentration in der Nachreifekammer überwacht.

Nach der Endphase können die nachgereiften Früchte zum Verzehr entnommen werden oder weiter bei konventionellen Lagerbedingungen gelagert werden.

Diese Ausführungsform ermöglicht einen aktiven Eingriff in den Nachreifungsprozess und damit verbunden eine Intensivierung oder Reduzierung des Nachreifungsprozesses in den Früchten, ausgelöst durch einstellbare Parameter.

Während die Nachreifung der Früchte fortschreitet, verändert sich die Atmungsaktivität der Früchte auf vorhersehbare Weise. Durch die Messung der Respirationsgase ermöglicht der erfindungsgemäße Nachreifungsprozess die genaue Bestimmung und Kontrolle des Nachreifungsfortschritts.

Optional wird die aktive Manipulation des Nachreifungsprozesses auch durch andere atmosphärische Parameter im Nachreifungsraum der Kammer ermöglicht. So ist in einer weiteren bevorzugten Ausführungsform der Erfindung vorgesehen, dass die Kontrolle und/oder Regelung der Temperatur im Nachreifungsraum der Kammer und insbesondere der Früchte erfolgt.

Von besonderem Vorteil ist, dass die Messung und/oder Regelung der vorgenannten Parameter konstant oder in vorgegebenen Abständen erfolgt. Dies sieht insbesondere vor, dass die Messwerte permanent oder in kurzen Abständen überwacht werden und eine Kontrolle nur dann stattfindet, wenn der kritische Grenzwert (kritische Konzentrationsänderung) über- oder unterschritten wird. Alternativ oder zusätzlich erfolgt eine Steuerung nach Einstellung oder Neueinstellung einzelner Parameter in vordefinierten Intervallen oder zu vorgegebenen Zeiten, die in einem definierten Verfahrenszyklus gespeichert werden. In dieser Ausführungsform umfasst das erfindungsgemäße Verfahren in Abhängigkeit von einem Ausgangszustand der Frucht und/oder der Menge an Früchten insbesondere mehrere Zyklen, die in den vorstehend beschriebenen vier Phasen enthalten sind, insbesondere Zeitintervalle, Temperatur- und Begasungsparameter sowie Grenzwerte für Gaskonzentrationen innerhalb des Nachreifungsraumes. Diese Ausführungsform ermöglicht es im weitesten Sinne, eine automatisierbare Implementierung des erfindungsgemäßen Verfahrens durchzuführen.

Dementsprechend bezieht sich ein Aspekt der Erfindung auf ein Verfahren zum Nachreifen von adstringierenden Früchten, bei dem die nachzureifenden Früchte in einem gasdichten Nachreifungsraum angeordnet sind und deren Nachreifungszustand während der Nachreifung der Früchte anhand einer Respiration der Früchte gemessen wird, wobei das Verfahren eine kontrollierte Begasung der Früchte mit Kohlenstoffdioxid umfasst.

Ein weiterer Aspekt der Erfindung bezieht sich auf eine Nachreifekammer zum Nachreifen und Lagern von Früchten, die einen gasdichten Nachreiferaum umfasst, wobei der Nachreiferaum dazu ausgebildet ist, das erfindungsgemäße Verfahren einer der vorgenannten Ausführungsformen durchzuführen. Die erfindungsgemäße Reifekammer umfasst einen gasdichten Nachreifungsraum zur Anordnung von nachzureifenden Früchten, ein Mittel zur Überwachung einer Kohlendioxid- und einer Sauerstoffkonzentration, eine Kohlendioxidgasquelle, ein Temperatursteuerungssystem, einen Kohlendioxidadsorber, einen Stickstoffgenerator, einen Wärmetauscher, eine Lunge, eine Druckklappe, und eine Sauerstoffzufuhr.

Ein weiterer Aspekt der Erfindung bezieht sich auf die Verwendung eines gasdichten Nachreifungsraums zum Nachreifen von adstringierenden Früchten, wobei die nachzureifenden adstringierenden Früchte im Nachreifungsraum angeordnet werden und während der Nachreifung dieser Früchte deren Respirationsaktivität gemessen wird.

In einer bevorzugten Ausführungsform umfasst die Nachreifekammer jeweils ein Mittel zum Messen einer Temperatur (Luft- und Fruchttemperatur) und/oder einer C2H4-Konzentration im Nachreiferaum der Kammer und entsprechende Mittel zum Auswerten der erhaltenen Messwerte. Diese Ausführungsform ermöglicht es, die für das erfindungsgemäße Verfahren notwendige Atmung zu überwachen und den Nachreifeprozess durch die atmosphärischen Parameter im Nachreiferaum aktiv zu steuern. Erfindungsgemäß besteht die Kammer aus einem Nachreiferaum, der nach den Kriterien einer sogenannten CA-Lagertechnik gasdicht ausgeführt und damit nach außen gasdicht verschlossen ist. Die Anforderung an die Gasdichtigkeit ist erreicht, wenn nach Erzeugung eines Unter- oder Überdrucks von 15 mm WS (Wassersäule = 150 Pa) im Nachreiferaum dieser Druck innerhalb von 0,5 Stunden um maximal 5, bevorzugter 4, bevorzugter 3, noch bevorzugter 2 mm WS (20 Pa), sinkt / oder steigt, wobei ein kleinerer Zahlenwert mit einer erhöhten Dichtheit verbunden ist. Der Nachreifungsraum umfasst ein gasdichtes CA-Tor sowie bevorzugt ein Mittel zur Regelung der Zuluft, der Abluft und/oder eines Über-/Unterdrucks der Reifekammer. Zusätzlich sind vorzugsweise ein Mittel zur Erzeugung von Stickstoff, ein Mittel zur Adsorption von CO2 und entsprechende Messtechnik vorgesehen und mit dem Nachreifungsraum der Kammer strömungstechnisch verbunden.

In bevorzugter Ausgestaltung umfasst die Kammer Mittel, die eine permanente Luftumwälzung ermöglichen, beispielsweise Luft-Ventilatoren. Diese wird durch ein Luftabschottungssystem am Früchte-Karton (Karton mit Palette) zur Erzeugung von Druckdifferenzen über den Karton verstärkt, da dann ein Luft- bzw. Gasaustausch durch die Kartons begünstigt ist. Dies ist insbesondere bei der Nachreifung von Kakipflaumen sinnvoll. Zur gleichmäßigen Nachreifung, wird vorzugsweise nur eine Luft-Drehrichtungs-Funktion installiert.

Bei herkömmlichen Nachreife-Systemen war zur Verbesserung der Gleichmäßigkeit des Nachreifeergebnisses eine Lüfter-Drehrichtungs-Umkehrschaltungs-Funktion notwendig, was beim erfindungsgemäßen System nicht mehr erforderlich ist.

Beim erfindungsgemäßen System aus Nachreifekammer und Verfahren kann bei Bedarf Stickstoff in die Kammer gespült und überschüssiges CO2 aus der Kammer-Atmosphäre entfernt werden. Ist der Sauerstoffgehalt zu niedrig, wird beispielsweise über ein gasdichtes Belüftungssystem Sauerstoff kontrolliert dem Reifungsraum zugeführt. Weiterhin passt sich die Luftumwälzungsmenge (Luftvolumenstrom und Drehzahl der Ventilatoren) im Nachreifungsraum dynamisch dem Nachreifeprozess und der Luftströmungs-Durchlässigkeit der Früchte-Kartons, vorzugsweise automatisch, an. Dabei wird mit Vorteil nur noch eine Drehrichtung/Luftrichtung der Lüfter-Ventilatoren über die Früchte-Kartons notwendig und trotzdem eine gleichmäßige Nachreifung der Früchte im gesamten Nachreifungsraum sichergestellt.

Mit besonderem Vorteil ist die erfindungsgemäße Nachreifekammer ein Container bzw. ein Kühlkoffer oder in einem solchen angeordnet, so dass das erfindungsgemäße Verfahren nicht nur auf eine ortsfeste Durchführung beschränkt ist.

Somit betrifft ein weiterer Aspekt der Erfindung einen Container/ Kühlkoffer zum Nachreifen, Lagern und/oder Transportieren von Früchten, wobei der Container einen gasdichten Reifungsraum, umfasst oder aus einem solchen besteht, in dem die nachzureifenden Früchte angeordnet werden, sowie eine Einheit zur Überwachung und Steuerung von Respirationsgasen im Innern des Nachreifungsraums, so dass während eines Transports, einer Nachreifung und/oder einer Lagerung der Früchte deren Respirationsaktivität mess- und steuerbar ist.

Der Nachreifungsraum weist dazu insbesondere die oben beschriebenen Merkmale eines Nachreifungsraums zur Durchführung des erfindungsgemäßen Verfahrens auf.

Die Ausführung der Nachreifekammer als Container hat den Vorteil, dass das erfindungsgemäße Nachreifen mit einem Transport der Früchte verbunden werden kann. Dies bietet eine enorme Zeit- u. Energieersparnis und ist daher wirtschaftlich besonders attraktiv. Darüber hinaus, werden Lagerzeiten verkürzt in denen die Früchte in einem bestimmten Nachreifezustand gehalten werden müssen oder in denen eine unkontrollierte Nachreifung der Früchte stattfindet. Dies führt aus den bereits beschriebenen Gründen zu qualitativ hochwertigen und geschmacklich ausgewogenen Früchten. Eine separate Nachreifung am Empfängerort ist nicht mehr notwendig, so dass eine kostenintensive Vorhaltung von Platz und Nachreifetechnik entfällt.

Die äußere Gestalt und Größe des Containers entspricht bevorzugt einem herkömmlich zum Transport von Früchten verwendetem Container. Somit ist unter Container vorliegend ein, insbesondere regelmäßiger, Grundkörper mit einer Grund-, einer Boden- und vier Seitenflächen. Bevorzugt weist der Container zusätzlich zu der üblichen Tür eine gasdichte Abschottungswand mit einer speziellen Abdichtungskonstruktion auf. Dabei handelt es sich bevorzugt um eine Druckschlauchabdichtungs-Rahmenwandmodul, welches mittels Gasdruck, bspw. Druckluft oder Stickstoff auf Druck, aufgeblasen und gehalten wird. Die durch den Lufteintrag herbeigeführte Volumenvergrößerung des Dichtungsschlauches führt zum gasdichten Verschluss der Übergänge zwischen Abschottungswand und Containergehäuse. Alternativ wird die Abschottungswand mittels Folientechnik versiegelt, wobei die Wand beispielsweise mit einer Einwegfolie für die Dauer des Transports bzw. der Lagerung gasdicht verklebt wird.

Der Container ist bevorzugt stapelbar und reversibel arretierbar.

In bevorzugter Ausgestaltung umfasst die Einheit zur Überwachung und Steuerung ein Mittel zur Messung einer Ethylenkonzentration, und/oder einer Temperatur innerhalb des Nachreifungsraums sowie entsprechende Mittel zur Auswertung der erhaltenen Messwerte und optional ein mit mindestens einem Mittel zur Auswertung verbundenes Mittel zur Steuerung und Regelung einer Atmosphäre innerhalb des Nachreifungsraums des Containers. Weiterhin wird ein System zur permanenten Luftumwälzung und Abschottung am Transportgut vorgesehen. Vergleichbar wie in einer herkömmlichen oder oben beschriebenen Nachreifekammer, wo über eine Druckdifferenz am Warenbehältnis eine Zwangsluftströmung darüber erreicht wird.

Mit besonderem Vorteil weist der Container ferner ein Mittel zum Regeln einer Temperatur im Nachreifungsraum auf. Die Luft wird bei Bedarf gekühlt und geheizt. Bei der Verwendung herkömmlicher Container und herkömmlicher Nachreifetechnik kommt es häufig aufgrund der erhöhten biologischen Atmungswärme bei der herkömmlichen Nachreifung und den engen Platzverhältnissen bei mangelnder Luftströmung und -führung zur Überhitzung der Früchte, was deren unkontrollierte und ungleichmäßige Nachreifung bis hin zu deren Verderb zur Folge hat. Ein Mittel zum Regeln der Temperatur, der Ethylenwerte und der Gaswerte, insbesondere CO2 und O2, ermöglicht indes eine Verhinderung von Überhitzung und Erfrierung der Früchte.

Ein weiterer Vorteil dieser Ausführungsform liegt darin, dass die Früchte in einem definierten Nachreifezustand gehalten werden können. Mit anderen Worten, es wird eine Nachreifung unterbrochen. Die Früchte verharren kontrolliert bzw. kontrollierbar in einem Nachreife-Zustand.

In bevorzugter Ausgestaltung der Erfindung wird als Ergänzung vorgesehen, dass im Innern des Nachreifungsraums ein Mittel zur Überwachung eines Nachreifezustands, insbesondere eine Kamera/Sensor zur Bestimmung des Nachreifezustands, angeordnet ist. Dies ist besonders während des Transports der Früchte vorteilhaft, da in diesem Zeitraum eine Überwachung durch Inaugenscheinnahme ausgeschlossen ist. Mit besonderem Vorteil ist das Mittel zur Überwachung mit einem Überwachungszentrum und/oder dem Steuermittel zur Steuerung des Verfahrens verbunden, um einen ermittelten Nachreifezustand mit einem Soll-Wert zu vergleichen und bei Abweichung das Verfahren und/oder die Temperatur anzupassen. Das Verfahren ermöglicht eine kontrollierbare und reproduzierbare gleiche Nachreifequalität, so dass aufgrund der Respirationsdaten und Erfahrungswerten zeitliche Nachreifeverläufe und Nachreifezustände auch ohne Kamera/Sensor-System angenommen werden können. So kann beispielsweise über Funk- und Satelliten-Technik und geplanter Ankunftszeit beim Empfänger die Nachreifung auf dem Transportweg gestartet werden. Das Ziel ist, dass der gewünschte Nachreifezustand der Frucht sich bei der Ankunft am Empfängerort einstellt. Auch geben die gewonnenen Respirationsdaten Informationen und Aufschlüsse über den aktuellen Nachreifezustand jeweiliger zu transportierenden Fruchtsorten.

Der erfindungsgemäßen Container wird bevorzugt nicht mit einem Kohlendioxidadsorber ausgestattet. Dieser würde viel Platz beanspruchen, der als Füllmenge verloren ginge. Die Funktion des Kohlendioxidadsorbers wird dann bevorzugt durch die Regelung des Einlasses von Stickstoff, Ethylen und Sauerstoff übernommen. Die CO2-Konzentration wird also relativ über eine Erhöhung von Sauerstoff, Ethylen und/oder Stickstoff reduziert. Mit anderen Worten, überschüssiges CO2 wird mit Hilfe des N2-Generators geregelt, indem der Nachreifungsraum im Container mit Stickstoff gespült wird, um den CO2-Gehalt im Container zu begrenzen.

Dabei wird die jeweils gewünschte Kohlenstoffdioxid- und Sauerstoffkonzentration gesteuert bzw. verändert. Daher werden im Regelprozess bevorzugt zeitnah, insbesondere simultan, diese Paramater (O2- und CO2-Konzentration) wieder nachgeregelt und entsprechend zugeführt.

Zur Nachreifung von Früchten im Transportbereich sollte ferner eine Quelle oder ein Speicher zur Verfügung stehen, wo Kohlenstoffdioxid vorrätig gelagert wird um eine gewünschte Anreicherung im Container zu erreichen. Dies wird bevorzugt durch fluidführend verbundene Druckflaschen realisiert, die die entsprechenden Gase enthalten.

Mit weiterem Vorteil weist der Nachreifungsraum im Container ein Mittel zur Regelung eines Drucks, insbesondere ein Überdruckventil auf, über das überschüssige Container-Luft in die Umgebung ausströmen kann.

In besonders bevorzugter Ausführungsform ist vorgesehen, dass der Container als reversibel arretierbarer Container ausgebildet ist. Dies ermöglicht eine Verwendung des Containers als Transportcontainer auf einem Schiff, einem Lastkraftwagen oder einem Güterzug.

Aufgrund ihrer universellen Einsatzbarkeit sind ISO-Container besonders geeignet für die Verwendung. ISO-Container sind genormte Großraumbehälter (Seefracht-Container, engl. freight containers) aus Stahl, die ein einfaches und schnelles Verladen, Befördern, Lagern und Entladen von Gütern ermöglichen. Die einschlägigen Normen (z. B. Maße, Halterungen, Stapelbarkeit) wurden koordiniert von der Internationalen Seeschifffahrts-Organisation (IMO) beschlossen und sind in der ISO-Norm 668 festgelegt.

Bei der Verwendung für einen LKW werden bevorzugt isolierte Kofferaufbauten für LKW im Sinne des erfindungsgemäßen Containers verwendet. Ein isolierter Kofferaufbau ist durch die üblicherweise doppelwandige GFK-Beplankung mit dazwischen liegendem Isolierkern aus Polyurethanschaum und Holz- oder Aluminiumverstrebungen wesentlich schwerer als ein vergleichbarer geschlossener Planenaufbau. Dadurch sinkt die übliche maximale Nutzlast von 25 auf 24 Tonnen.

Damit auch weiterhin die für genormte Transporteinrichtungen wie Europaletten und Gitterbox sinnvolle Innenbreite von 2,40 m erhalten bleibt, dürfen temperaturgeführte Aufbauten über eine Gesamtbreite von 2,60 m verfügen und somit die sonst maximal erlaubte Gesamtbreite von 2,55 m ohne Ausnahmegenehmigung überschreiten. Da die maximale Fahrzeuglänge aber nicht wachsen darf, können übliche Kühlauflieger nur 33 statt 34 Europaletten transportieren.

Alternativ oder zusätzlich ist der erfindungsgemäße Container als Fertigbauteil für eine Nachreifungskammer ausgeführt.

Vorliegend sind unter Container auch Kühl-LKW-Aufleger zu verstehen, wie sie im LKW-Transport-Gewerbe für verderbliche Lebensmittel eingesetzt werden. Auch hier kann die beschriebene Technik Anwendung finden.

Ein weiterer Aspekt der Erfindung betrifft die Verwendung des erfindungsgemäßen Containers zum Nachreifen, Lagern und/oder Transportieren auf einem Schiff, einem Lastkraftwagen oder einem Güterzug.

Dabei weist der Container bevorzugt einen Zugang für eine Energieversorgung auf, die mit einer externen Energiequelle oder der Energieversorgung des Schiffs, des Lastkraftwagens beziehungsweise des Güterzugs verbindbar ist. Darüber hinaus ist es vorteilhaft, wenn der Container ein Mittel zum externen Datenaustausch aufweist.

Bei der Verwendung auf einem Lastkraftwagen ist, insbesondere auch eine nicht arretierbare, Anordnung des Containers auf der Ladefläche des Lastkraftwagens und/oder einem Anhänger für einen Lastkraftwagen bevorzugt vorgesehen
Zusammenfassend bietet der erfindungsgemäße Container die Vorteile einer kontrollierten, gleichmäßigen und optimalen Nachreifung von Früchten auf dem Transportweg wie Seetransport und Landtransport. Die Nachreifung kann mittels moderner Kommunikationsmittel zielgerichtet gestartet und kontrolliert werden. In jedem einzelnen Container kann mittels modernem Trackingsystems, ein Datenaustausch über Herkunft, Wareninhalt, Zielort und Ankunftsdatum via Fernüberwachung eine Nachreifung zum idealen Zeitpunkt gestartet werden, so dass beim Eintreffen der Wunschnachreifegrad der Frucht sicher erreicht wird. Der Empfänger und Distributor kann umgehend die Ware, ohne einen weiteren gezielten Nachreifeprozess einleiten zu müssen, an die Liefer- und Verbrauchsstellen kommissionieren und weiter ausliefern.

Unter Verwendung des erfindungsgemäßen Nachreifeverfahrens wird deutlich weniger Kühl-und Heizenergie zur Nachreifung benötigt. Dies macht es technisch möglich, eine kontrollierte und gleichmäßige Nachreifung in dem räumlich limitierten und stark eingeschränkten Behältnis von Containern erfolgreich durchzuführen. Die vollständige Kontrolle über den Nachreifeprozess und der wesentlich niedrigere Kühlenergiebedarf macht dies möglich und ist dem erfindungsgemäßen Nachreifeverfahren geschuldet.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen und Aspekte der Erfindung sind, sofern im Einzelfall nicht anders ausgeführt, mit Vorteil miteinander kombinierbar. Insbesondere sind Darstellungen und Beschreibungen zu bevorzugten Ausgestaltungen und Ausführungsformen des Verfahrens stets entsprechend auf die Nachreifekammer und den Container übertragbar und vice versa.

### Kurzbeschreibung der Figuren

Die Erfindung wird nachfolgend anhand eines Ausführungsbeispiels und dazugehöriger Zeichnungen näher erläutert. Die Figuren zeigen:

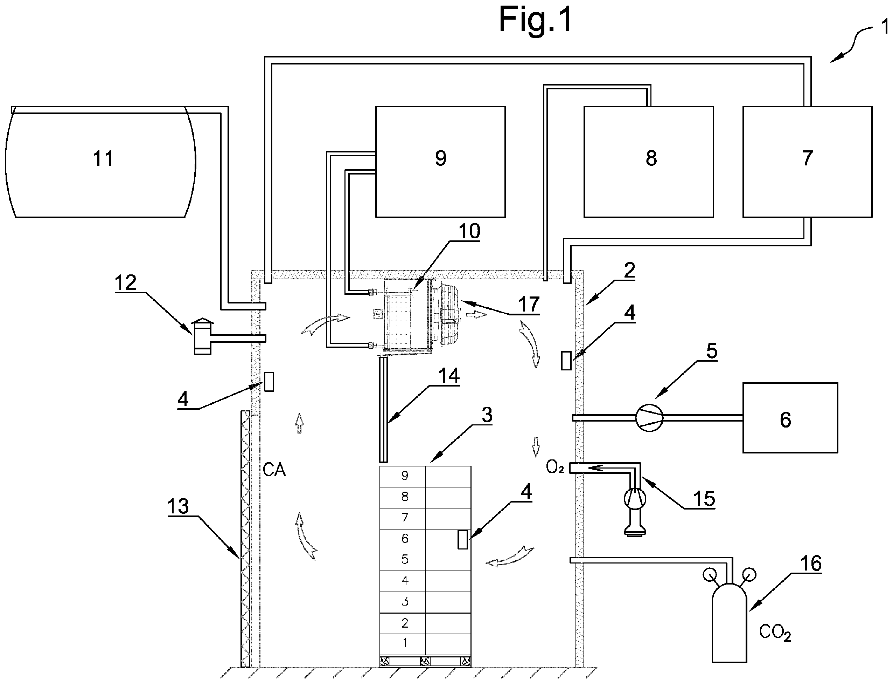

- Fig. 1: eine schematische Darstellung einer erfindungsgemäßen Nachreifungskammer in einer bevorzugten Ausgestaltung der Erfindung.

### Detaillierte Beschreibung der Erfindung

Figur 1 stellt eine Nachreifekammer 1 gemäß der Erfindung dar, die einen Nachreiferaum 2 zur Aufnahme von Früchten zum Nachreifen oder Lagern umfasst. Der Nachreiferaum 2 ist im Sinne einer sogenannten CA-Qualität (engl. controlled atmosphere CA) gasdicht ausgeführt, so dass nur ein sehr geringer Gasaustausch zwischen dem Inneren des Nachreiferaumes 2 und einem Äußeren der Kammer 1 stattfindet. Dies wird dadurch gewährleistet, dass der Nachreiferaum 2 über ein CA-Tor 13 mit den Früchten 3 beladen wird. Nur ein optimaler Nachreifeprozess und die Lagerung von Früchten mit absolut gleichmäßigen und reproduzierbaren Gaskonzentrationen gewährleistet eine gleichmäßige Nachreifung der Früchte. Dafür sorgt ein CA-Tor 13, das sich beispielsweise nach dem Prinzip der statischen Kontaktkraft schließt. Die Früchte 3 sind z. B. auf Paletten angeordnet. Das Raumvolumen eines bevorzugten Nachreiferaumes 2 liegt je nach Kammertyp in der Regel zwischen 177 m³ und 266 m³. Die Abmessungen können jedoch an eine gewünschte Menge Früchte 3 und die baulichen Gegebenheiten angepasst werden.

Die Palettengröße, Palettenmenge und Menge der nachreifenden Früchte kann variieren.

Es wurde festgestellt, dass bei einer Auslastung des Nachreiferaumes 2 von 60%, d. h. 14 gefüllten Paletten in Bezug auf das vorstehende Beispiel, die Konzentrationswerte im erfindungsgemäßen Verfahren nicht angepasst werden müssen. Bei geringerer Auslastung und optional bei jeder von 100% abweichenden Auslastung des Nachreiferaumes 2 kann eine Anpassung der Überwachungs- und Regelparameter des Verfahrens, z.B. mit Hilfe eines Steuerprogramms, erfolgen.

Der Nachreiferaum 2 weist mindestens ein Messmittel 4 auf, beispielsweise zur Temperaturmessung, oder ist mit einer Vorrichtung 5 + 6 verbunden, die eine Entfernung von im Nachreiferaum 2 befindlichem Gas zur Messung atmosphärischer Parameter ermöglicht. Diese atmosphärischen Parameter sind z.B. eine Kohlendioxidkonzentration, eine Ethylenkonzentration und/oder eine Sauerstoffkonzentration. Darüber hinaus ist der Nachreiferaum 2 vorzugsweise strömungstechnisch mit einer CO2-Zufuhr 16, einer Sauerstoffzufuhr 15, z.B. als Frischluftzufuhr, sowie einem Stickstoff-Generator 8 verbunden. Diese können durch ein Steuermittel zur Regelung der Gasatmosphäre innerhalb des Nachreifungsraums 2 eine durch das Steuermittel definierte Gasmenge in den Nachreifungsraum 2 entlassen. Darüber hinaus ist der Nachreifungsraum 2 strömungstechnisch mit einem Kohlendioxidadsorber 7 verbunden, der eine Entfernung von Kohlendioxid ermöglicht.

Bei der Anwendung im erfindungsgemäßen Container wird die Funktion des Kohlendioxidadsorbers 7 bevorzugt durch den Einlass von Stickstoff und Sauerstoff übernommen. Die CO₂-Konzentration wird also relativ über eine Erhöhung von Sauerstoff und/oder Stickstoff reduziert. Um bei einer Gaszufuhr einen Druckanstieg im Nachreiferaum 2 zu vermeiden, z. B. bei Frischluftzufuhr über die Einstellmittel 15, einer erforderlichen Stickstoff-Zufuhr oder durch CO2-Begasung, verfügt der Nachreiferaum 2 zusätzlich über eine Druckklappe 12, die zum Ausgleich eines Über- oder Unterdrucks eingerichtet ist. Alternativ oder zusätzlich ist der Nachreiferaum 2 strömungstechnisch mit einer sogenannten Lunge 11 verbunden, in der überschüssiges Gas freigesetzt werden kann oder aus der Gas zurückfließen kann. Dadurch können bestimmte Druckschwankungen im Nachreiferaum ausgeglichen werden.

Neben den Atemgasen Sauerstoff und Kohlendioxid kann die Nachreifung durch weitere Parameter im Nachreiferaum 2, insbesondere die Temperatur, beeinflusst werden. Um hier eine Interventionsmöglichkeit zu bieten, verfügt der Nachreiferaum 2 vorzugsweise über einen Wärmetauscher 10 in Kombination mit Ventilatoren 17, der strömungstechnisch mit einem Temperaturregelsystem 9, zum Beispiel einer Kühlung und/oder einer Heizung, verbunden ist.

Die zur Beeinflussung der Atmosphäre innerhalb der Nachreifekammer 1 und der CO2-Zufuhr 16 geeigneten Einstellmittel und Vorrichtungen 4, 5, 6, 7, 8, 9, 15 sind vorzugsweise mit einer Steuereinrichtung 6 verbunden, in der beispielsweise ein Algorithmus zur Steuerung eines Prozesses gespeichert ist, der in Abhängigkeit von Messwerten und zeitlichen Parametern eine automatische Steuerung der Atmosphäre innerhalb der Nachreifekammer 1 ermöglicht. Insbesondere wird hier das erfindungsgemäße Verfahren durchgeführt, das automatisch und/oder zumindest teilweise manuell gesteuert werden kann.

Dies kann vorzugsweise durch Einstellen der Temperatur in der Nachreifekammer 1 auf ca. +16°C bis +20°C und Messen des Anstiegs der Kohlenstoffdioxidkonzentration oder der Verringerung der Sauerstoffkonzentration innerhalb von ca. 0,5 bis 2 Stunden im Nachreiferaum 2 durch die Nachreifeprozesse. Ist diese Konzentrationsänderung Δ[O2] oder Δ[CO2] größer als ein vorgegebener Wert, kann bereits die zweite Phase gestartet werden. In der zweiten Phase der Nachreifung wird die Temperatur weiter erhöht auf zwischen +20°C und +30°C. Die Frucht beginnt stärker zu atmen. Die Kohlendioxidkonzentration in der Kammer wird im Laufe der Zeit langsam erhöht. Anschließend, nachdem die Änderung der Sauerstoffkonzentration sich erhöht hat und konstant bleibt, wird die Kohlendioxidkonzentration in der Kammer durch dynamische Regelung der Kohlendioxidbegasung konstant gehalten. In der dritten Phase, wenn keine weitere Änderung der Sauerstoffkonzentration feststellbar ist, wird die CO2-Begasung gestoppt, die Kammer mit Frischluft gespült und die Temperatur auf einen niedrigeren Wert von vorzugsweise +18 bis +25°C eingestellt.

Ein Verfahren nach der Erfindung, das mit der oben beschriebenen Nachreifekammer durchführbar ist, wird in einer bevorzugten Ausführungsform ausführlich beschrieben. In dieser Ausführungsform umfasst das Verfahren eine Vielzahl von Phasen.

In der ersten Phase wird ein vergleichbarer Zustand der einzelnen Früchte, basierend auf ihrem Reifegrad und ihrem Nachreifegrad (Reifegrad und Adstringens der Früchte zu Beginn der Nachreifung), durch Einstellen der Temperatur auf +15 bis +20°C und Messen der Respirationsgase CO2 und O2 erreicht. In den weiteren Phasen findet dann der eigentliche Nachreifeprozess statt.

### Erste Phase:

Die erste Phase dauert etwa 2 bis 6 Stunden und umfasst das Einstellen einer Temperatur aus einem Temperaturbereich von +15 bis +20 °C und eine regelmäßige, insbesondere stündliche, Messung der CO2-Produktion/O2-Aufnahme durch die Früchte. Bleibt die Atmungsaktivität, d. h. die Änderung der CO2-Produktion (Erhöhung der CO2-Konzentration Δ[CO2]) und/oder die Änderung der O2-Konzentration Δ[O2] (Senkung der O2-Konzentration Δ[O2]) konstant auf einen vorgegebenen Wert, wird die nächste Phase gestartet.

### Zweite Phase:

Die Temperatur wird auf einen Wert aus einem Bereich von +20 bis +30°C erhöht und stabil gehalten wird. Zu diesem Zeitpunkt tritt eine Zunahme des Metabolismus der Kaki-Frucht unstetig/ungleichmäßig auf, d. h. die Frucht soll bewusst stärker atmen. Somit sucht das System die ideale Temperatur für den Stoffwechsel der Frucht. Dieser Vorgang der zweiten Phase dauert ca. 2 - 6 Stunden. Dabei wird in regelmäßigen Zeitabständen, z. B. im Bereich von 0,5 - 2,5 Stunden, die O2- und CO2-Konzentration gemessen, um zu bestimmen, wie viel O2 von den Früchten aufgenommen und wie viel CO2 abgeben wurde, da dies einen Rückschluss auf den Nachreifungsprozess erlaubt. Sobald die Frucht stressfrei ist und die Atmung gleichmäßig ist, wird kontrolliert Kohlendioxid zugeführt um eine Konzentration zwischen 50Vol% und 90Vol% in die Kammer zu erreichen Die Begasung der Früchte beginnt mit einer langsam ansteigenden CO2-Konzentration. Das bedeutet, dass die Begasung mit CO2 konstant ist und zu einer ansteigenden CO2-Konzentration in der Nachreifekammer/-raum führt. Die richtige und optimale CO2-Konzentration ist gefunden, wenn der Sauerstoffverbrauch in der Höhe gleich bleibt und nicht schwankt.

### Dritte Phase:

Die dritte Phase dauert etwa 18 bis 32 Stunden, in denen die Temperatur in einem Bereich von +20 °C bis +30°C stabil gehalten wird. Dabei wird in regelmäßigen Zeitabständen, z. B. im Bereich von 0,5 - 2,5 Stunden, die O2-Konzentration gemessen, um zu bestimmen, wie viel O2 von den Früchten aufgenommen wird, da dies einen Rückschluss auf den Nachreifungsprozess erlaubt. Die Begasung mit CO2 wird dynamisch um einen CO2-Konzentrationssollwert innerhalb der Nachreifekammer geregelt. Der CO2-Sollwert wird auf den Wert der am Ende der zweiten Phase erreichten CO2-Konzentration eingestellt, vorzugsweise wird eine CO2-Konzentration von etwa 50 bis 90 Vol.% eingestellt. Wenn die O2-Messungen keine weitere Änderung der O2-Konzentration erkennen, wird die Endphase gestartet.

### Endphase:

In der Endphase wird die Temperatur, ausgehend vom Temperaturwert der Zwischenphase, langsam, d. h. insbesondere über mehrere Stunden, insbesondere über 20 bis 52 Stunden, auf einen Wert von +18°C bis +25 °C abgesenkt. Außerdem wird die CO2-Begasung gestoppt und die Nachreifekammer mit Frischluft gespült. Es stellt sich vorzugsweise eine CO2-Konzentration von maximal 1 Vol.% ein.

Vorzugsweise wird die Sauerstoffkonzentration in der Kammer 1 während des gesamten Nachreifungsprozesses während aller vier oben beschriebenen Phasen auf einem optimalen Niveau von 15,0 bis 20,9 Vol.% gehalten. Dies wird vorzugsweise durch Zufuhr von Frischluft in die Kammer durch die Frischluftzufuhr 15 erreicht, wenn die O2-Konzentration in der Kammer den optimalen Bereich verlässt. Messungen der Gaskonzentrationen über den Gasanalysator 6 erfolgen nur, wenn keine aktive Frischluftzugabe stattfindet, um nur den Einfluss der in der Kammer enthaltenen Früchte auf die Atmosphäre in der Kammer zu messen.

Nach Abschluss der Endphase ist die eigentliche Nachreifung beendet. Der Nachreiferaum kann geöffnet werden und muss nicht mehr gasdicht verschlossen bleiben. Die Früchte sind sofort zum Verzehr bereit, können gegebenenfalls aber weiter gelagert werden. Der erfindungsgemäße Nachreifeprozess erzeugt bissfeste und adstringensfreie Früchte.

### Bezugszeichenliste

- 1: Nachreifekammer mit Technik
- 2: Nachreiferaum
- 3: Transportmittel mit Früchten
- 4: Temperatursensoren
- 5: Stellmittel Gas-Messpumpe
- 6: Steuervorrichtung und Gasanalysenmessgerät
- 7: CO₂-Adsorber
- 8: N₂-Generator
- 9: Temperatursteuerungssystem
- 10: Wärmetauscher und Gas / Flüssigmedium zur Temperaturregelung (Kühlen / Heizen)
- 11: Lunge
- 12: Druckklappe
- 13: CA-Tor
- 14: Flexibles Luft-Abschottungssystem
- 15: Sauerstoff-Belüftungseinrichtung mit Ventilator / Frischluftversorgung
- 16: Kohlenstoffdioxid-Gasflasche
- 17: Ventilator

## Patentansprüche

1. Verfahren zum Nachreifen von adstringierenden Früchten, wobei in einem gasdichten Nachreifungsraum (2) die nachzureifenden Früchte angeordnet werden und während der Nachreifung der Früchte deren Respirationsaktivität gemessen wird
**dadurch gekennzeichnet, dass**
das Verfahren eine kontrollierte Begasung der Früchte mit Kohlenstoffdioxid umfasst.

2. Verfahren nach Anspruch 1, wobei die Früchte Kakipflaumen sind.

3. Verfahren nach einem der vorherigen Ansprüche, wobei eine Kohlenstoffdioxidkonzentration im Nachreifungsraum (2) kontinuierlich oder in regelmäßigen Abständen variiert wird.

4. Verfahren nach Anspruch 3, wobei die Kohlenstoffdioxidkonzentration im Bereich von 40 bis 90 Vol.% variiert wird.

5. Verfahren nach einem der Ansprüche 3 oder 4, wobei die Kohlenstoffdioxidkonzentration als Funktion einer Sauerstoffkonzentration variiert wird.

6. Verfahren nach Anspruch 1, wobei in einer zweiten Phase eine Begasung mit CO2 stattfindet, sobald in einer ersten Phase eine vorbestimmte Erhöhung der CO2-Konzentration und/oder eine vorbestimmte Verringerung der O2-Konzentration innerhalb einer definierten Zeiteinheit gemessen wird.

7. Verfahren nach einem der vorherigen Ansprüche, wobei Temperaturen der Früchte und der Gase im Inneren des Reifungsraums (2) gemessen und kontinuierlich oder in regelmäßigen Abständen geregelt werden.

8. Nachreifekammer zur Nachreifung von adstringierenden Früchten, wobei die Kammer umfasst:
a) einen gasdichten Nachreifungsraum (2) zur Anordnung von nachzureifenden Früchten (3),
b) ein Mittel zur Überwachung einer Kohlendioxid- und einer Sauerstoffkonzentration (6),
c) eine Kohlendioxidgasquelle (16),
d) ein Temperatursteuerungssystem (9),
e) einen Kohlendioxidadsorber (7),
f) einen Stickstoffgenerator (8),
g) einen Wärmetauscher (10),
h) eine Lunge (11),
i) eine Druckklappe (12), und
j) eine Sauerstoffzufuhr (15);
wobei die Nachreifekammer ausgebildet ist, das Verfahren nach einem der vorherigen Ansprüche auszuführen.

9. Nachreifekammer nach Anspruch 8, wobei die Sauerstoffzufuhr (15) als Frischluftversorgung ausgebildet ist und die Kohlendioxidgasquelle (16) als Kohlendioxid-Gasflasche ausgebildet ist.

10. Nachreifekammer nach einem der Ansprüche 8 bis 9, wobei die Nachreifekammer als reversibel arretierbarer Container ausgebildet ist.

11. Verwendung des Containers nach Anspruch 10, zum Nachreifen, Lagern und Transportieren auf einem Schiff, einem Lastkraftwagen oder einem Güterzug.

12. Kraftfahrzeug aufweisend einen Container nach Anspruch 10.

13. Verwendung eines gasdichten Nachreifungsraums (2) zum Nachreifen von adstringierenden Früchten, wobei die nachzureifenden adstringierenden Früchte im Nachreifungsraum angeordnet werden und während der Nachreifung dieser Früchte deren Respirationsaktivität gemessen wird.

## Claims

1. A method for post-ripening astringent fruits, wherein the to-be-post-ripened fruits are placed in a gas-tight post-ripening chamber (2), and their respiration activity is measured during the post-ripening,
**characterized in that**
the method comprises controlled fumigation of the fruits with carbon dioxide.

2. The method according to claim 1, wherein the fruits are persimmons.

3. The method according to any one of the preceding claims, wherein a carbon dioxide concentration in the post-ripening chamber (2) is varied continuously or at regular intervals.

4. The method according to claim 3, wherein the carbon dioxide concentration is varied within a range of 40 to 90 vol.%.

5. The method according to any one of claims 3-4, wherein the carbon dioxide concentration is varied as a function of an oxygen concentration.

6. The method according to claim 1, wherein in a second phase, the fumigation with carbon dioxide takes place as soon as a predetermined increase in a carbon dioxide concentration and/or a predetermined decrease in an oxygen concentration is measured within a defined time unit in a first phase.

7. The method according to any one of the preceding claims, wherein temperatures of the fruits and gases inside the ripening chamber (2) are measured and regulated continuously or at regular intervals.

8. A post-ripening chamber for post-ripening astringent fruits, comprising:
a) a gas-tight post-ripening chamber (2) for arranging to-be-post-ripened fruits (3),
b) a means for monitoring carbon dioxide and oxygen concentrations (6),
c) a carbon dioxide gas source (16),
d) a temperature control system (9),
e) a carbon dioxide absorber (7),
f) a nitrogen generator (8),
g) a heat exchanger (10),
h) a gas reservoir (11),
i) a pressure valve (12), and
j) an oxygen supply (15);
wherein the post-ripening chamber is configured to carry out the method according to any one of the preceding claims.

9. The post-ripening chamber according to claim 8, wherein the oxygen supply (15) is designed as a fresh air supply and the carbon dioxide gas source (16) is designed as a carbon dioxide gas cylinder.

10. The post-ripening chamber according to any one of claims 8-9, wherein the post-ripening chamber is designed as a reversibly lockable container.

11. Use of the container according to claim 10 for post-ripening, storage, and transport on a ship, a truck, or a freight train.

12. A motor vehicle comprising the container according to claim 10.

13. Use of a gas-tight post-ripening chamber (2) for post-ripening astringent fruits, wherein the to-be-post-ripened astringent fruits are placed in the post-ripening chamber, and their respiration activity is measured during post-ripening of these fruits.

## Revendications

1. Procédé de post-maturation de fruits astringents, dans lequel les fruits à faire mûrir sont disposés dans une chambre de post-maturation étanche au gaz (2) et l'activité respiratoire desdits fruits est mesurée pendant la post-maturation des fruits
**caractérisé en ce que**
le procédé comprend une fumigation contrôlée des fruits avec du dioxyde de carbone.

2. Procédé selon la revendication 1, dans lequel les fruits sont des kakis.

3. Procédé selon l'une des revendications précédentes, dans lequel une concentration en dioxyde de carbone dans la chambre de post-maturation (2) est variée de manière continue ou à intervalles réguliers.

4. Procédé selon la revendication 3, dans lequel la concentration en dioxyde de carbone est variée dans une plage comprise entre 40 et 90 % en volume.

5. Procédé selon l'une des revendications 3 ou 4, dans lequel la concentration en dioxyde de carbone est variée en fonction d'une concentration en oxygène.

6. Procédé selon la revendication 1, dans lequel, dans une deuxième phase, une fumigation au CO2 a lieu dès qu'une augmentation prédéterminée de la concentration en CO2 et/ou une diminution prédéterminée de la concentration en O2 est mesurée dans une première phase, dans une unité de temps définie.

7. Procédé selon l'une des revendications précédentes, dans lequel les températures des fruits et des gaz à l'intérieur de la chambre de maturation (2) sont mesurées et régulées en continu ou à intervalles réguliers.

8. Chambre de post-maturation destinée à la post-maturation de fruits astringents, ladite chambre comprenant :
a) une chambre de post-maturation étanche au gaz (2) destinée à recevoir les fruits à post-maturer (3),
b) un moyen de surveillance d'une concentration en dioxyde de carbone et en oxygène (6),
c) une source de dioxyde de carbone gazeux (16),
d) un système de régulation de la température (9),
e) un adsorbant de dioxyde de carbone (7),
f) un générateur d'azote (8),
g) un échangeur de chaleur (10),
h) un poumon (11),
i) un clapet de pression (12) et
j) une alimentation en oxygène (15) ;
la chambre de post-maturation étant conçue pour mettre en œuvre le procédé selon l'une des revendications précédentes.

9. Chambre de post-maturation selon la revendication 8, dans laquelle l'apport en oxygène (15) est conçu comme une alimentation en air frais et la source de dioxyde de carbone gazeux (16) est conçue comme une bouteille de gaz de dioxyde de carbone.

10. Chambre de post-maturation selon l'une des revendications 8 à 9, dans laquelle la chambre de post-maturation est conçue comme un conteneur verrouillable de manière réversible.

11. Utilisation du conteneur selon la revendication 10 pour la post-maturation, le stockage et le transport sur un navire, un camion ou un train de marchandises.

12. Véhicule automobile comportant un conteneur selon la revendication 10.

13. Utilisation d'une chambre de post-maturation étanche au gaz (2) pour la post-maturation de fruits astringents, dans laquelle les fruits astringents à post-maturer sont disposés dans la chambre de post-maturation et, au cours de la post-maturation de ces fruits, leur activité respiratoire est mesurée.
